(19) **Europäisches Patentamt / European Patent Office / Office européen des brevets**

(11) **EP 4 349 299 A1**

(12) # EUROPEAN PATENT APPLICATION
published in accordance with Art. 153(4) EPC

(43) Date of publication:
**10.04.2024 Bulletin 2024/15**

(21) Application number: **21943172.3**

(22) Date of filing: **28.05.2021**

(51) International Patent Classification (IPC):
**A61C 13/00** *(2006.01)*    **A61C 13/083** *(2006.01)*
**A61K 6/802** *(2020.01)*    **A61K 6/853** *(2020.01)*
**A61L 27/10** *(2006.01)*    **C04B 35/653** *(2006.01)*
**C04B 35/64** *(2006.01)*    **C04B 35/14** *(2006.01)*
**C04B 35/01** *(2006.01)*

(52) Cooperative Patent Classification (CPC):
**C03C 3/097; A61C 5/73; A61C 5/77; A61C 8/0012;
A61C 13/0022; A61C 13/082; C03B 32/00;
C03C 4/0021; C03C 10/0027**

(86) International application number:
**PCT/KR2021/006673**

(87) International publication number:
**WO 2022/250183 (01.12.2022 Gazette 2022/48)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: Hass Co., Ltd.
**Gangwon-do 25452 (KR)**

(72) Inventors:
• **LIM, Hyung Bong**
  **Ansan-si Gyeonggi-do 15521 (KR)**
• **KIM, Yong Su**
  **Gangneung-si Gangwon-do 25497 (KR)**

(74) Representative: **Gulde & Partner**
**Patent- und Rechtsanwaltskanzlei mbB**
**Wallstraße 58/59**
**10179 Berlin (DE)**

(54) ## DENTAL BULK BLOCK TO BE CUT AND MANUFACTURING METHOD THEREFOR

(57) Proposed is a dental bulk block for a CAD/CAM machining process, the dental bulk block being a glass-ceramic block having a crystalline phase embedded in an amorphous glass matrix. The crystalline phase includes lithium disilicate as a main crystalline phase, no sub-crystalline phase exists, and the crystalline phase has a mean grain size of 0.01 to 1.0 um and a crystallinity degree of 25 to 45%. The dental bulk block can improve machinability during cutting such as CAD/CAM machining in the state of a high-strength workpiece with high flexural strength, thereby reducing tool resistance and wear rate, increasing tool life span, and reducing edge chipping during machining. In addition, a dental restoration having translucency variations can be manufactured through a simple process of machining a block and altering post-heat treatment conditions, and thus can be realized with various shades. Therefore, it is possible to contribute to simplifying product management.

EP 4 349 299 A1

**Description**

**Technical Field**

The present disclosure relates to a dental bulk block for a CAD/CAM machining process and a manufacturing method thereof, the dental bulk block being capable of use as a high-strength workpiece while realizing translucency variations. The present invention is the result of research conducted with the support of Gangwon Techno Park's project that fosters companies and supports technological independence related to materials, parts, and equipment.

**Background Art**

Materials and methods for manufacturing artificial teeth using glass containing a lithium disilicate crystal (monolithic dental crown) are already known through various patents. However, in the known techniques, it is difficult to perform direct machining due to due to a coarse crystalline phase. For machining, it is necessary to primarily form a lithium metasilicate crystalline phase (machinable crystalline), and then secondarily form a high-strength lithium disilicate crystalline phase through heat treatment. Therefore, dimensional accuracy is lowered due to shrinkage caused by the heat treatment, and it is cumbersome to additionally perform the heat treatment. In general, prosthetic machining by CAD-CAM requires manufacturing of a prosthesis by directly machining a bulk body in a dental clinic, and fitting of the bulk body to a patient as quickly as possible (one-day appointment). Therefore, a time delay due to a heat treatment process poses financial difficulties on patients and users.

In addition, a conventional lithium disilicate glass-ceramic material has a limit in realizing high light transmittance or opalescence similar to those of natural teeth due to its coarse crystalline phase.

In particular, in order to machine the conventional lithium disilicate glass-ceramic material, a lithium metasilicate glass-ceramic having good machinability is primarily prepared, and then lithium disilicate is prepared through a secondary crystallization heat treatment to improve strength. In this case, the size of a crystalline phase is about equal to or greater than 3 um. However, in this state, machinability is remarkably lowered, and only the required strength can be realized.

In an effort to solve these problems, the present applicant has proposed a method of manufacturing a glass-ceramic including lithium disilicate and silicate crystalline phases with excellent machinability by changing a primary heat treatment temperature so as to control a crystal size, and has received a patent therefor (Korean Patent No. 10-1975548). Specifically, there has been disclosed a method of manufacturing a glass-ceramic for teeth, the glass-ceramic including a silica crystalline phase. The method includes the steps of: performing a primary heat treatment of a glass composition at 400 to 850°C, the glass composition including 60 to 83 wt% of $SiO_2$, 10 to 15 wt% of $Li_2O$, 2 to 6 wt% of $P_2O_5$, which serves as a nucleating agent, 1 to 5 wt% of $Al_2O_3$, which increases the glass transition temperature and softening point and improves the chemical durability of glass, 0.1 to 3 wt% of SrO, which increases the softening point of glass, 0.1 to 2 wt% of ZnO, 1 to 5 wt% of a colorant, and 2.5 to 6 wt% of $Na_2O+K_2O$, which is an alkali metal oxide that increases the coefficient of thermal expansion of glass; and performing a secondary heat treatment at 780 to 880°C after the primary heat treatment. The primary heat treatment results in the generation of a lithium disilicate crystalline phase and a silica crystalline phase each having a nano size of 5 to 2000 nm, and the secondary heat treatment temperature is used to control light transmittance.

According to the disclosed method, the glass-ceramic obtained through the primary heat treatment has a crystalline size of 5 to 2000 nm, and is a material that is machinable in a lithium disilicate state by precipitating the silica crystalline phase in addition to the lithium disilicate crystalline phase. In addition, the lithium disilicate and silica crystalline phases having a size of 30 to 500 nm are obtained by performing the primary heat treatment in a temperature range of 480 to 800°C, which is preferable in terms of cutting force.

The present inventors have attempted to devise a solution for providing artificial teeth with improved physical properties and aesthetic properties through simple post-heat treatment while improving workability in machining performed by doctors or technicians who are consumers by using a primary heat treatment result as a workpiece and have proposed the present disclosure.

**Disclosure**

**Technical Problem**

Accordingly, the present disclosure has been made keeping in mind the above problems occurring in the related art, and an objective of the present disclosure is to provide a dental glass-ceramic block capable of controlling translucency of a restoration through an additional heat treatment process and exhibiting excellent machinability during cutting such as CAD/CAM machining even in a high-strength workpiece state.

**Technical Solution**

One aspect of the present disclosure provides a dental bulk block for a CAD/CAM machining process, the dental bulk block being a glass-ceramic block having a crystalline phase embedded in an amorphous glass matrix, in which the crystalline phase may include lithium disilicate as a main crystalline phase, no sub-crystalline phase may exist, and the crystalline phase may have a mean grain size of 0.01 to 1.0 um and a crystallinity degree of 25 to 45%.

In one embodiment of the present disclosure, the dental bulk block may have a biaxial flexure strength of 200 to 380 MPa according to ISO 6872 and a fracture toughness of 1.7 to 2.1 MPa · m$^{1/2}$.

In one embodiment of the present disclosure, the dental bulk block may achieve an average light transmittance of 40 to 50% when heat-treated in a range of 811 to 820°C for 1 minute to 1 hour.

In one embodiment of the present disclosure, the dental bulk block may achieve an average light transmittance of 30 to 40% when heat-treated in a range of 821 to 850°C for 1 minute to 1 hour.

In one embodiment of the present disclosure, the dental bulk block may achieve an average light transmittance of 20 to 30% when heat-treated in a range of 851 to 880°C for 1 minute to 1 hour.

In one embodiment of the present disclosure, the glass matrix may include 69.0 to 75.0 wt% of $SiO_2$, 12.0 to 14.0 wt% of $Li_2O$, 2.5 to 3.5 wt% of $Al_2O_3$, 0.12 to 0.22 wt% of ZnO, 1.1 to 2.7 wt% of $K_2O$, 0.1 to 0.3 wt% of $Na_2O$, and 2.0 to 6.0 wt% of $P_2O_5$.

Another aspect of the present disclosure provides a method of manufacturing a dental bulk block, the method including: preparing a block having a predetermined shape by melting a glass composition including 69.0 to 75.0 wt% of $SiO_2$, 12.0 to 14.0 wt% of $Li_2O$, 2.5 to 3.5 wt% of $Al_2O_3$, 0.12 to 0.22 wt% of ZnO, 1.1 to 2.7 wt% of $K_2O$, 0.1 to 0.3 wt% of $Na_2O$, and 2.0 to 6.0 wt% of $P_2O_5$, forming and cooling the melted glass composition in a mold, and annealing the resultant material at a predetermined rate from 465 to 280°C for 20 minutes to 2 hours; and

heat-treating the block for crystallization from 300°C to a maximum temperature of 755 to 810°C for 30 minutes to 6 hours in a furnace.

Another aspect of the present disclosure provides a method of manufacturing a dental restoration, the method including: manufacturing a predetermined dental restoration by machining the dental bulk block according to the aspect of the present disclosure using a machining machine-tool; and

heat-treating the predetermined dental restoration to control translucency,

in which the controlling of the translucency may be at least one step selected from a high translucency control step of performing heat treatment in a range of 811 to 820°C for 1 minute to 1 hour, an medium translucency control step of performing heat treatment in a range of 821 to 850°C for 1 minute to 1 hour, and a low translucency control step of performing heat treatment in a range of 851 to 880°C for 1 minute to 1 hour.

Another embodiment of the present disclosure provides a dental restoration that is obtained by the method according to the aspect of the present disclosure and is a glass-ceramic body having a crystalline phase embedded in an amorphous glass matrix, in which the crystalline phase may include lithium disilicate as a main crystalline phase and at least one selected from cristobalite, tridymite, quartz, spodumene, virgilite, and a mixture thereof as a sub-crystalline phase, and the dental restoration may have a biaxial flexural strength of at least 450 MPa.

In one embodiment of the present disclosure, the dental restoration may be selected from a crown, an inlay, an onlay, and a veneer.

## Advantageous Effects

A dental bulk block according to the present disclosure can improve machinability during cutting such as CAD/CAM machining in the state of a high-strength workpiece with high flexural strength, thereby reducing tool resistance and wear rate, increasing tool life span, and reducing edge chipping during machining. In addition, a dental restoration having translucency variations can be manufactured through a simple process of machining a block and altering post-heat treatment conditions, and thus can be realized with various shades. Therefore, it is possible to contribute to simplifying product management.

## Description of Drawings

FIG. 1 is a graph of an X-ray diffraction (XRD) analysis result of a dental bulk block according to the present disclosure.

FIG. 2 is a scanning electron microscope (SEM) image illustrating the microstructure and crystalline size of the dental bulk block according to the present disclosure.

FIG. 3 is a comparative graph of cutting resistance for the dental bulk block according to the present disclosure.

FIG. 4 is a graph of a change in transmittance according to post-heat treatment temperature of the dental bulk block according to the present disclosure.

## Mode for Invention

The foregoing and further aspects of the present disclosure will become more apparent from exemplary embodiments in conjunction with the accompanying drawings. Hereinafter, exemplary embodiments of the present disclosure will be described in detail such that the disclosure can be better understood and easily embodied by one of ordinary skill in the art to which this disclosure belongs.

One embodiment of the present disclosure provides a dental bulk block for a CAD/CAM machining process, which is a glass-ceramic block having a crystalline phase embedded in an amorphous glass matrix, in which the crystalline phase includes lithium disilicate as a main crystalline phase, no sub-crystalline phase exists, and the crystalline phase has a mean grain size of 0.01 to 1.0 um and a crystallinity degree of 25 to 45%.

In the previous and following descriptions, the term "main crystalline phase" may be defined as a crystalline phase occupying at least 80% by weight of the entire crystalline phase, and the term "sub-crystalline phase" may be defined as a remaining crystalline phase other than the main crystalline phase in the entire crystalline phase.

The amount of the crystalline phases may be calculated through X-ray diffraction analysis. For example, in a specimen having two polymorphs a and b, the ratio $F_a$ of the crystalline phase a is quantitatively expressed by Equation 1 below.

[Equation 1]

$$F_a = \frac{1}{1 + K\left(\dfrac{I_b}{I_a}\right)}$$

This value may be obtained by measuring the strength ratio of the two crystalline phases and obtaining the constant K. K is the absolute strength ratio $I_{oa}/I_{ob}$ of two pure polymorphs, which is obtained by measuring a standard material.

In the previous and following descriptions, the term "main crystalline phase" may be defined as being set on the basis of the amount calculated using this calculation method.

In the previous and following descriptions, the bulk block is not limited in shape, and for example, may include a bulk body of various types such as a block type, a disk type, an ingot type, a cylinder type, etc.

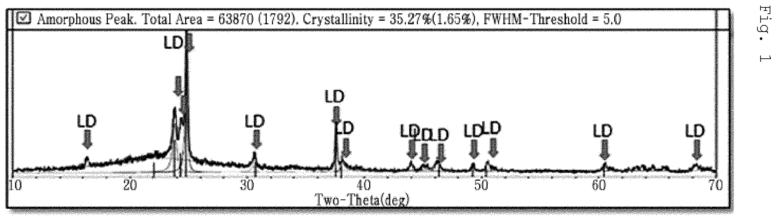

FIG. 1 illustrates a graph of an X-ray diffraction (XRD) analysis result of the dental bulk block according to the embodiment.

In FIG. 1, the bulk dental block according to the embodiment of the present disclosure includes the lithium disilicate as the main crystalline phase. Only the pure lithium disilicate crystalline phase is precipitated in the glass matrix, with a crystallinity degree of 25 to 45%.

Considering machinability and transparency control by post-heat treatment, the dental bulk block according to the present disclosure preferably has a crystallinity degree of 25 to 45%.

In the previous and following descriptions, the term "crystallinity degree" may be defined as the ratio of the crystalline phase to the amorphous glass matrix, which may be obtained through various methods. In one embodiment of the present disclosure, the crystallinity degree is a value automatically calculated by an X-ray diffractometer.

In the previous and following descriptions, XRD analysis will be understood to mean an analysis that is based on a result obtained using an X-ray diffraction analyzer (D/MAX-2500, Rigaku, Japan; Cu Kα (40 kV, 60 mA), scan rate: 6°/min., 2θ: 10 to 70 (degrees), Rigaku, Japan).

The crystalline phase can be formed in the form of microcrystals. These microcrystals have various sizes and size distributions depending on temperature, thereby realizing variations in mechanical properties and light transmittance.

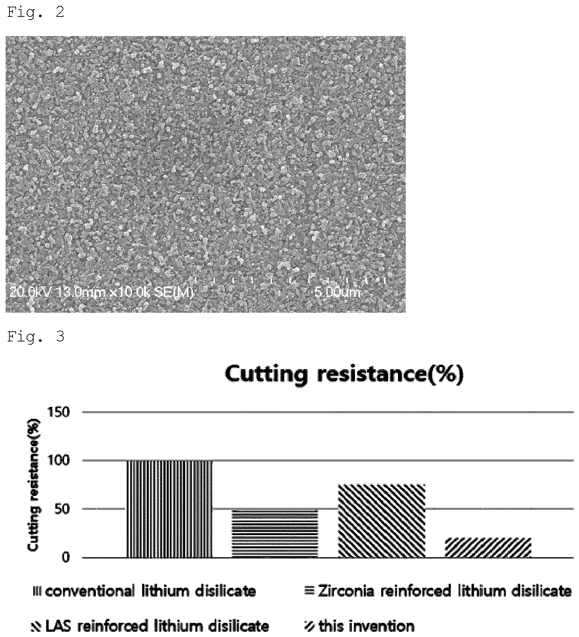

In addition, as an example, FIG. 2 illustrates a scanning electron microscope (SEM) image of the dental bulk block according to the present disclosure. The dental bulk block is featured in that the crystalline phase has a mean grain size of 0.01 to 1.0 um, which is 2.5 to 40 times lower than that of a conventional CAD/CAM workpiece having lithium metasilicate as the main crystalline phase.

The SEM image thus obtained may be used to calculate a mean grain size of crystalline phases. Specifically, the mean grain size may be obtained by a linear intercept method involving: drawing a diagonal line or a straight line randomly on the SEM image; dividing by the length of the line the number of crystalline grains intercepted by the line; and determining the mean grain size depending on magnification.

In the previous and following descriptions, it will be understood that the size of the crystalline phases is calculated by this method.

As the crystalline size and crystallinity degree as described above are satisfied, the dental bulk block for the CAD/CAM machining process has a biaxial flexure strength of 200 to 380 MPa according to ISO 6872, and a fracture toughness of 1.7 to 2.1 MPa·m$^{1/2}$. This satisfies the physical properties improved by 10 to 15% compared to the conventional CAD/CAM workpiece having lithium metasilicate as the main crystalline phase, and thus edge chipping during machining can be advantageously reduced by about 30% or more.

Characteristically, in the case of the dental bulk block obtained according to the present disclosure, it is possible to significantly lower the resistance generated in a machining machine-tool during machining. Specifically, a glass-ceramic block having a crystalline phase embedded in an amorphous glass matrix as illustrated in FIGS. 1 and 2 and having dimensions of 12×14×18 mm was prepared. The glass-ceramic block was rotated at 250 RPM and was cut with an IsoMet™ low speed saw (Buehler, Germany) and a diamond electroplated wheel (2514485H17, Norton, USA), and a cutting time was measured. In addition, for each of a conventional lithium disilicate-based block (Rosetta SM, HASS Corp.), a zirconia reinforced lithium disilicate-based block (Celtra Duo, DentsplySirona), and an LAS reinforced lithium disilicate-based block (Nice, Straumann), a cutting time was measured in the same manner as described above.

From each cutting time value thus obtained, cutting resistance (%) was calculated. Specifically, the cutting time obtained for the conventional lithium disilicate-based block was assumed to be 100%, and a relative percentage of the cutting time for each of the other blocks was calculated as a cutting resistance value.

The results are illustrated in FIG. 3.

From the results of FIG. 3, it can be seen that the conventional lithium disilicate-based block had the highest cutting resistance, followed by the LAS reinforced lithium disilicate-based block and the zirconia reinforced lithium disilicate-based block, and the block according to the present disclosure exhibited the lowest cutting resistance. From these results, it can be found that the lithium disilicate-based glass-ceramic block according to the present disclosure is the most machinable.

As described above, the dental bulk block is the glass-ceramic block having the crystalline phase embedded in the amorphous glass matrix. The crystalline phase includes lithium disilicate as the main crystalline phase, no sub-crystalline phase exists, and the crystalline phase has a mean grain size of 0.01 to 1.0 $\mu$m and a crystallinity degree of 25 to 45%. The crystalline phase has various sizes and size distributions depending on temperature. Therefore, the dental bulk block exhibits variations in mechanical properties and light transmittance.

For example, the dental bulk block for the CAD/CAM machining process according to the embodiment of the present disclosure may achieve an average light transmittance of 40 to 50% when heat-treated in the range of 811 to 820°C for 1 minute to 1 hour. The bulk block having such high translucency may be useful for applications such as inlays or onlays, but is not limited thereto.

A dental bulk block for a CAD/CAM machining process according to another embodiment of the present disclosure may achieve an average light transmittance of 30 to 40% when heat-treated in the range of 821 to 850°C for 1 minute to 1 hour. The bulk block having such medium translucency may be useful for coloring purposes, but is not limited thereto.

A dental bulk block for a CAD/CAM machining process according to another embodiment of the present disclosure may achieve an average light transmittance of 20 to 30% when heat-treated in the range of 851 to 880°C for 1 minute to 1 hour. The bulk block having such low translucency may be useful for applications such as posterior crowns, but is not limited thereto.

In the previous and following descriptions, the light transmittance is measured using a UV-visible spectrometer (UV-2401PC, Shimadzu, Japan).

In order to measure the light transmittance of the dental bulk block according to the present disclosure, the surface of each specimen was wiped clean with ethanol, and then the light transmittance was measured using a UV-visible spectrometer (UV-2401PC, Shimadzu, Japan). Here, the measurement was performed under a condition in which the wavelength range was 300 to 800 nm, and the slit width was 2.0 nm. The average light transmittance may be defined as an average value of light transmittance in the entire wavelength range.

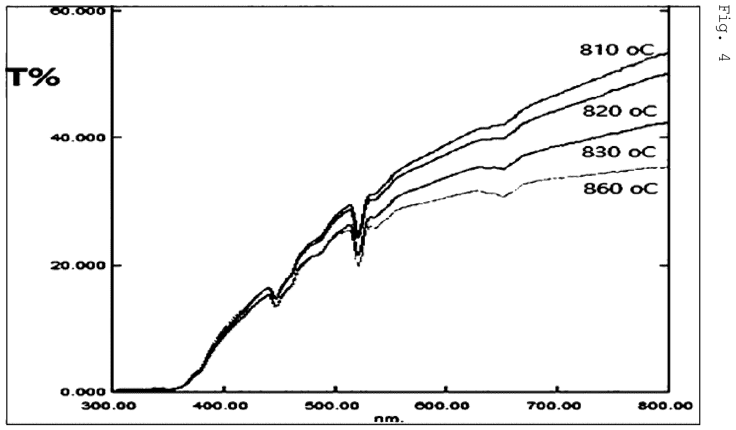

FIG. 4 is a graph of a change in transmittance according to post-heat treatment temperature of the dental bulk block according to the present disclosure, in which the transmittance is measured according to the method described above.

Meanwhile, in the case of the dental bulk block for the CAD/CAM machining process according to the present disclosure, the glass matrix may include 69.0 to 75.0 wt% of $SiO_2$, 12.0 to 14.0 wt% of $Li_2O$, 2.5 to 3.5 wt% of $Al_2O_3$, 0.12 to 0.22 wt% of ZnO, 1.1 to 2.7 wt% of $K_2O$, 0.1 to 0.3 wt% of $Na_2O$, and 2.0 to 6.0 wt% of $P_2O_5$.

A glass composition constituting the glass matrix is subjected to crystal nucleation and crystal growth heat treatment for crystallization to precipitate a crystalline phase in an amorphous glass matrix. The temperature at which crystal nucleation and crystal growth occur in the glass temperature is in the range of 500 to 880°C. That is, a crystal nucleus starts to form from a minimum of 500°C and a crystal grows while the temperature is raised. The crystal grows up to a maximum of 880°C at which the dental bulk block exhibits the lowest light transmittance for use as the material for artificial teeth. In other words, the translucency is gradually lowered from the temperature at which the crystal starts to grow to a maximum of 850°C. The present disclosure is based on this phenomenon. That is, a single bulk block may be manufactured by performing crystal growth to the extent that high strength and sufficient machinability are satisfied. The single bulk block thus obtained may be subjected to machining and then be controlled in translucency by altering the heat treatment conditions depending on the required fitting position or the unique color of patient's teeth. Therefore, if the single bulk block can exhibit variations in its translucency, it is possible to contribute to simplifying product management.

As to natural teeth, the translucency locally varies not only within a single natural tooth but also among multiple natural teeth. In addition, the required translucency may be different for each patient and each fitting position. Therefore, if such translucency variations depending on the heat treatment temperature can be realized using a single bulk block in various ways according to purposes, it is possible to provide artificial teeth that satisfy various aesthetic requirements by using a small workpiece.

In this aspect, the present disclosure provides a method of manufacturing a dental bulk block. The method includes the steps of: preparing a block having a predetermined shape by melting a glass composition including 69.0 to 75.0 wt% of $SiO_2$, 12.0 to 14.0 wt% of $Li_2O$, 2.5 to 3.5 wt% of $Al_2O_3$, 0.12 to 0.22 wt% of ZnO, 1.1 to 2.7 wt% of $K_2O$, 0.1 to 0.3 wt% of $Na_2O$, and 2.0 to 6.0 wt% of $P_2O_5$, forming and cooling the melted glass composition in a mold, and annealing the resultant material at a predetermined rate from 465 to 280°C for 20 minutes to 2 hours; and

heat-treating the block for crystallization from 300°C to a maximum temperature of 755 to 810°C for 30 minutes to 6 hours in a furnace.

In a specific embodiment of the present disclosure, first, a glass composition was prepared by weighing and mixing 69.0 to 75.0 wt% of $SiO_2$, 12.0 to 14.0 wt% of $Li_2O$, 2.5 to 3.5 wt% of $Al_2O_3$, 0.12 to 0.22 wt% of ZnO, 1.1 to 2.7 wt% of $K_2O$, 0.1 to 0.3 wt% of $Na_2O$, and 2.0 to 6.0 wt% of $P_2O_5$.

As a component of the glass composition, $Li_2CO_3$ may be added instead of $Li_2O$. In this case, carbon dioxide ($CO_2$), which is a carbon (C) component of $Li_2CO_3$, is exhausted in a gas form during glass melting. In addition, as alkali oxides, $K_2CO_3$ and $Na_2CO_3$ may be added instead of $K_2O$ and $Na_2O$, respectively. In this case, carbon dioxide ($CO_2$), which is a carbon (C) component of $K_2CO_3$ and $Na_2CO_3$, is exhausted in a gas form during glass melting.

The mixing is performed using a dry mixing process. Specifically, a ball-milling process may be used as the dry mixing process. Specifically, the ball-milling process involves charging a starting raw material into a ball-milling machine, and then rotating the ball-milling machine at a predetermined speed to mechanically pulverize and uniformly mix the starting raw material. Balls for use in the ball-milling machine may be made of a ceramic material such as zirconia or alumina. The balls may have the same sizes, or at least two different sizes. The sizes of the balls, milling time, rotation speed of the ball-milling machine, etc. are controlled in consideration of a desired grain size. For example, in consideration of the desired grain size, the size of each of the balls may be set to be in the range of about 1 to 30 mm, and the rotation speed of the ball-milling machine may be set to be in the range of about 50 to 500 RPM. The ball milling is preferably performed for 1 to 48 hours in consideration of the desired grain size. During the ball milling, the starting raw material is pulverized into fine grains with a uniform grain size, and at the same time is uniformly mixed.

The mixed starting raw material is placed in a melting furnace, and then melted by heating the melting furnace containing the starting raw material therein. Here, the term "melting" means that the starting raw material is converted into a viscous liquid state, not a solid state. The melting furnace is preferably made of a material having a high melting point and a high strength and also having a low contact angle for suppressing the phenomenon in which a molten material is adhered thereto. To this end, preferably, the melting furnace is made of a material such as platinum (Pt), diamond-like carbon (DLC), or chamotte, or is coated with a material such as platinum (Pt) or diamond-like carbon (DLC).

The melting is preferably performed at 1,400 to 2,000°C under normal pressure for 1 to 12 hours. When the melting temperature is less than 1,400°C, the starting raw material may fail to melt completely. On the other hand, when the melting temperature exceeds 2,000°C, excessive energy consumption is necessary, which is not economical. Therefore, it is preferable that the melting is performed at a temperature within the above range. In addition, when the melting time is very short, the starting raw material may fail to sufficiently melt. On the other hand, when the melting time is very long, excessive energy consumption is necessary, which is not economical. The temperature increase rate of the melting furnace is preferably about 5 to 50°C/min. When the temperature increase rate of the melting furnace is very slow, a long period of time may be taken, which may reduce productivity. On the other hand, when the temperature increase rate thereof is very fast, a rapid temperature increase may cause an increase in volatilization amount of the starting raw material, and the physical properties of glass-ceramic may be poor. Therefore, it is preferable that the temperature of the melting furnace is increased at a rate within the above range. The melting is preferably performed in an oxidation atmosphere such as oxygen ($O_2$) and air.

The molten material is poured into a predetermined mold in order to obtain a dental glass-ceramic having a desired shape and size. The mold is preferably made of a material having a high melting point and a high strength and also having a low contact angle for suppressing the phenomenon in which the glass molten material is adhered thereto. To this end, the mold is made of a material such as graphite and carbon. In order to prevent thermal shock, the molten material is preferably preheated to 200 to 300°C and then be poured into the mold.

After the molten material contained in the mold is formed and cooled, the resultant material is preferably subjected to annealing at a predetermined rate from 465 to 280°C for 20 minutes to 2 hours. Here, the predetermined rate is preferably 1.5 to 10°C/min.

With the annealing, it is possible to reduce stress deviation in the resultant material, preferably so that no stress exists, thereby having a desirable effect on controlling the size of the crystalline phase and improving the homogeneity of crystal distribution in a subsequent crystallization process.

The resultant material subjected to the annealing is transferred to a firing furnace for crystallization heat treatment to perform crystal nucleation and growth, thereby manufacturing a desired glass-ceramic.

Here, the crystallization heat treatment is performed in the furnace for 30 minutes to 6 hours from 300°C to a maximum temperature of 755 to 810°C. As a result, a bulk block including only pure lithium disilicate as a crystalline phase having a size of 0.01 to 1.0 um is obtained.

The dental bulk block obtained through the above-described method may exhibit characteristics in which the translucency of the material varies depending on the heat treatment temperature range.

In the case of bulk-type blocks, they are used as workpieces for machining such as CAD/CAM machining. In general, conventional glass-ceramics have a difficulty in controlling translucency due to coarse crystalline phases, and are difficult to machine due to high strength. On the contrary, the block according to the present disclosure includes microcrystals, and these microcrystals have various sizes and size distributions depending on temperature. Therefore, the block exhibits regional variations in physical properties and translucency. On the basis of this fact, a block may be manufactured from a single glass composition. The block thus obtained may be subjected to machining and then controlled in translucency depending on the heat treatment condition.

In view of such aspect, the present disclosure provides a method of manufacturing a dental restoration. The method includes the steps of: manufacturing a predetermined dental restoration by machining the dental bulk block for the CAD/CAM machining process according to the embodiments by using a machining machinetool; and heat-treating the predetermined dental restoration to control translucency. The controlling of the translucency is at least one step selected from a high translucency control step of performing heat treatment in the range of 811 to 820°C for 1 minute to 1 hour, a medium translucency control step of performing heat treatment in the range of 821 to 850°C for 1 minute to 1 hour, and a low translucency control step of performing heat treatment in the range of 851 to 880°C for 1 minute to 1 hour.

The dental restoration according to the present disclosure exhibits the characteristics as illustrated in FIG. 4. Therefore, a dental restoration with low translucency to high translucency can be obtained from a single block, and thus can be realized with more than 80 various shades.

The dental restoration thus obtained is a glass-ceramic body having a crystalline phase embedded in an amorphous glass matrix. The crystalline phase may include lithium disilicate as a main crystalline phase and at least one selected from cristobalite, tridymite, quartz, spodumene, virgilite, and a mixture thereof as a sub-crystalline phase. The dental restoration may have a biaxial flexural strength of at least 450 MPa. The translucency of the dental restoration may be variously controlled depending on the fitting position or the patient.

Therefore, it is possible to provide a dental restoration with improved aesthetic properties by realizing translucency variations while being able to tolerate the occlusal force of the posterior region.

In the previous and following descriptions, the dental restoration may be selected from a crown, an inlay, an onlay, and a veneer, but is not limited thereto.

Although the exemplary embodiments of the present disclosure have been disclosed for illustrative purposes, those skilled in the art will appreciate that various modifications, additions, and substitutions are possible, without departing from the scope and spirit of the disclosure as disclosed in the accompanying claims.

**Industrial Applicability**

The present disclosure relates to a dental bulk block for a CAD/CAM machining process and a manufacturing method thereof, the dental bulk block being capable of use as a high-strength workpiece while realizing translucency variations.

The dental bulk block according to the present disclosure can improve machinability during cutting such as CAD/CAM machining in the state of a high-strength workpiece with high flexural strength, thereby reducing tool resistance and wear rate, increasing tool life span, and reducing edge chipping during machining. In addition, a dental restoration having translucency variations can be manufactured through a simple process of machining a block and altering post-heat treatment conditions, and thus can be realized with various shades. Therefore, it is possible to contribute to simplifying product management.

**Claims**

1. A dental bulk block for a CAD/CAM machining process, the dental bulk block being a glass-ceramic block having a crystalline phase embedded in an amorphous glass matrix,

   wherein the crystalline phase comprises lithium disilicate as a main crystalline phase,
   no sub-crystalline phase exists, and
   the crystalline phase has a mean grain size of 0.01 to 1.0 um and a crystallinity degree of 25 to 45%.

2. The dental bulk block of claim 1, wherein the dental bulk block has a biaxial flexure strength of 200 to 380 MPa according to ISO 6872 and a fracture toughness of 1.7 to 2.1 MPa · m$^{1/2}$.

3. The dental bulk block of claim 1, wherein the dental bulk block achieves an average light transmittance of 40 to 50% when heat-treated in a range of 811 to 820°C for 1 minute to 1 hour.

4. The dental bulk block of claim 1, wherein the dental bulk block achieves an average light transmittance of 30 to 40% when heat-treated in a range of 821 to 850°C for 1 minute to 1 hour.

5. The dental bulk block of claim 1, wherein the dental bulk block achieves an average light transmittance of 20 to 30% when heat-treated in a range of 851 to 880°C for 1 minute to 1 hour.

6. The dental bulk block of claim 1, wherein the glass matrix comprises 69.0 to 75.0 wt% of $SiO_2$, 12.0 to 14.0 wt% of $Li_2O$, 2.5 to 3.5 wt% of $Al_2O_3$, 0.12 to

0.22 wt% of ZnO, 1.1 to 2.7 wt% of $K_2O$, 0.1 to 0.3 wt% of $Na_2O$, and 2.0 to 6.0 wt% of $P_2O_5$.

7. A method of manufacturing a dental bulk block, the method comprising:

preparing a block having a predetermined shape by melting a glass composition comprising 69.0 to 75.0 wt% of $SiO_2$, 12.0 to 14.0 wt% of $Li_2O$, 2.5 to 3.5 wt% of $Al_2O_3$, 0.12 to 0.22 wt% of ZnO, 1.1 to 2.7 wt% of $K_2O$, 0.1 to 0.3 wt% of $Na_2O$, and 2.0 to 6.0 wt% of $P_2O_5$, forming and cooling the melted glass composition in a mold, and annealing the resultant material at a predetermined rate from 465 to 280°C for 20 minutes to 2 hours; and
heat-treating the block for crystallization from 300°C to a maximum temperature of 755 to 810°C for 30 minutes to 6 hours in a furnace.

8. A method of manufacturing a dental restoration, the method comprising:

manufacturing a predetermined dental restoration by machining the dental bulk block of claim 1 using a machining machine-tool; and
heat-treating the predetermined dental restoration to control translucency,
wherein the controlling of the translucency is at least one step selected from a high translucency control step of performing heat treatment in a range of 811 to 820°C for 1 minute to 1 hour, an medium translucency control step of performing heat treatment in a range of 821 to 850°C for 1 minute to 1 hour, and a low translucency control step of performing heat treatment in a range of 851 to 880°C for 1 minute to 1 hour.

9. A dental restoration that is obtained by the method of claim 8 and is a glass-ceramic body having a crystalline phase embedded in an amorphous glass matrix,

wherein the crystalline phase comprises lithium disilicate as a main crystalline phase and at least one selected from cristobalite, tridymite, quartz, spodumene, virgilite, and a mixture thereof as a sub-crystalline phase, and
the dental restoration has a biaxial flexural strength of at least 450 MPa.

10. The dental restoration of claim 9, wherein the dental restoration is selected from a crown, an inlay, an onlay, and a veneer.

Fig. 1

Fig. 2

Fig. 3

**Cutting resistance(%)**

Ⅲ conventional lithium disilicate ≡ Zirconia reinforced lithium disilicate

☒ LAS reinforced lithium disilicate ⁄⁄ this invention

Fig. 4

## INTERNATIONAL SEARCH REPORT

| International application No. |
| --- |
| **PCT/KR2021/006673** |

**A. CLASSIFICATION OF SUBJECT MATTER**

**A61C 13/00**(2006.01)i; **A61C 13/083**(2006.01)i; **A61K 6/802**(2020.01)i; **A61K 6/853**(2020.01)i; **A61L 27/10**(2006.01)i; **C04B 35/653**(2006.01)i; **C04B 35/64**(2006.01)i; **C04B 35/14**(2006.01)i; **C04B 35/01**(2006.01)i

According to International Patent Classification (IPC) or to both national classification and IPC

**B. FIELDS SEARCHED**

Minimum documentation searched (classification system followed by classification symbols)

A61C 13/00(2006.01); A61C 13/083(2006.01); A61K 6/027(2006.01); A61K 6/831(2020.01); C03B 27/012(2006.01); C03C 10/00(2006.01); C03C 10/04(2006.01); C03C 10/12(2006.01); C03C 3/097(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 치과용 벌크 블록(dental bulk block), 글라스 세라믹(glass ceramic), 리튬 디실리케이트(lithium disilicate), 결정상(crystal phase), 열처리(heat treatment), 투광성(light transmittance)

**C. DOCUMENTS CONSIDERED TO BE RELEVANT**

| Category* | Citation of document, with indication, where appropriate, of the relevant passages | Relevant to claim No. |
| --- | --- | --- |
| A | KR 10-2018-0102711 A (HASS CORPORATION) 18 September 2018 (2018-09-18) See claims 1-7; paragraphs [0020], [0024] and [0036]-[0041]; and figures 1-5. | 1-10 |
| A | EP 2788297 B1 (3M INNOVATIVE PROPERTIES COMPANY) 06 November 2019 (2019-11-06) See claim 1. | 1-10 |
| A | KR 10-2015-0119256 A (IVOCLAR VIVADENT AG) 23 October 2015 (2015-10-23) See entire document. | 1-10 |
| A | KR 10-2016-0105826 A (KABUSHIKI KAISHA GC) 07 September 2016 (2016-09-07) See entire document. | 1-10 |
| A | US 2020-0069399 A1 (IVOCLAR VIVADENT AG) 05 March 2020 (2020-03-05) See entire document. | 1-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 February 2022** | **25 February 2022** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**

| International application No. |
|---|
| **PCT/KR2021/006673** |

**C. DOCUMENTS CONSIDERED TO BE RELEVANT**

| Category* | Citation of document, with indication, where appropriate, of the relevant passages | Relevant to claim No. |
|---|---|---|
| A | KR 10-2016-0048990 A (CORNING INCORPORATED) 04 May 2016 (2016-05-04)<br>See entire document. | 1-10 |

Form PCT/ISA/210 (second sheet) (July 2019)

**INTERNATIONAL SEARCH REPORT**
Information on patent family members

International application No.

**PCT/KR2021/006673**

| Patent document cited in search report | | | Publication date (day/month/year) | Patent family member(s) | | | Publication date (day/month/year) |
|---|---|---|---|---|---|---|---|
| KR | 10-2018-0102711 | A | 18 September 2018 | CN | 108117263 | A | 05 June 2018 |
| | | | | JP | 2018-145084 | A | 20 September 2018 |
| | | | | KR | 10-1975548 | B1 | 08 May 2019 |
| EP | 2788297 | B1 | 06 November 2019 | EP | 2788297 | A1 | 15 October 2014 |
| | | | | US | 2014-0322503 | A1 | 30 October 2014 |
| | | | | US | 9351807 | B2 | 31 May 2016 |
| | | | | WO | 2013-086187 | A1 | 13 June 2013 |
| KR | 10-2015-0119256 | A | 23 October 2015 | CA | 2898793 | A1 | 21 August 2014 |
| | | | | CA | 2898793 | C | 20 June 2017 |
| | | | | CN | 105008298 | A | 28 October 2015 |
| | | | | CN | 105008298 | B | 15 May 2018 |
| | | | | EP | 2765119 | A1 | 13 August 2014 |
| | | | | EP | 2765119 | B1 | 28 July 2021 |
| | | | | JP | 2016-514078 | A | 19 May 2016 |
| | | | | JP | 6198852 | B2 | 20 September 2017 |
| | | | | MX | 2015010390 | A | 29 October 2015 |
| | | | | US | 10064708 | B2 | 04 September 2018 |
| | | | | US | 2015-0374465 | A1 | 31 December 2015 |
| | | | | WO | 2014-124879 | A1 | 21 August 2014 |
| KR | 10-2016-0105826 | A | 07 September 2016 | AU | 2015-307769 | A1 | 28 April 2016 |
| | | | | AU | 2015-307769 | B2 | 13 July 2017 |
| | | | | CA | 2931076 | A1 | 03 March 2016 |
| | | | | CA | 2931076 | C | 30 July 2019 |
| | | | | CN | 106413626 | A | 15 February 2017 |
| | | | | CN | 106413626 | B | 27 October 2020 |
| | | | | EP | 3011929 | A1 | 27 April 2016 |
| | | | | JP | 2017-128581 | A | 27 July 2017 |
| | | | | JP | 2020-094057 | A | 18 June 2020 |
| | | | | JP | 6347792 | B2 | 27 June 2018 |
| | | | | JP | 6666282 | B2 | 13 March 2020 |
| | | | | KR | 10-2018-0001597 | A | 04 January 2018 |
| | | | | KR | 10-2021-0118973 | A | 01 October 2021 |
| | | | | KR | 10-2306341 | B1 | 30 September 2021 |
| | | | | RU | 2016133387 | A | 27 September 2018 |
| | | | | RU | 2732011 | C2 | 10 September 2020 |
| | | | | US | 10405953 | B2 | 10 September 2019 |
| | | | | US | 11166795 | B2 | 09 November 2021 |
| | | | | US | 2016-0287361 | A1 | 06 October 2016 |
| | | | | US | 2017-0224450 | A1 | 10 August 2017 |
| | | | | US | 2019-0328495 | A1 | 31 October 2019 |
| | | | | US | 9700392 | B2 | 11 July 2017 |
| | | | | WO | 2016-031399 | A1 | 27 April 2017 |
| | | | | WO | 2016-031399 | A1 | 03 March 2016 |
| US | 2020-0069399 | A1 | 05 March 2020 | EP | 3617162 | A1 | 04 March 2020 |
| KR | 10-2016-0048990 | A | 04 May 2016 | CN | 105683109 | A | 15 June 2016 |
| | | | | CN | 113845309 | A | 28 December 2021 |
| | | | | EP | 3041800 | A1 | 13 July 2016 |
| | | | | JP | 2016-529201 | A | 23 September 2016 |
| | | | | JP | 2019-081705 | A | 30 May 2019 |

Form PCT/ISA/210 (patent family annex) (July 2019)

**INTERNATIONAL SEARCH REPORT**
Information on patent family members

International application No.

**PCT/KR2021/006673**

| Patent document cited in search report | Publication date (day/month/year) | Patent family member(s) | | | Publication date (day/month/year) |
|---|---|---|---|---|---|
| | | JP | 2021-001116 | A | 07 January 2021 |
| | | JP | 6490692 | B2 | 27 March 2019 |
| | | JP | 6778290 | B2 | 28 October 2020 |
| | | KR | 10-2273284 | B1 | 07 July 2021 |
| | | US | 10196301 | B2 | 05 February 2019 |
| | | US | 2015-0274581 | A1 | 01 October 2015 |
| | | US | 2016-0152512 | A9 | 02 June 2016 |
| | | US | 2017-0334767 | A1 | 23 November 2017 |
| | | US | 9701573 | B2 | 11 July 2017 |
| | | WO | 2015-034860 | A1 | 12 March 2015 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101975548